# EUROPEAN PATENT SPECIFICATION

(11) **EP 4 422 090 B1**
(45) Date of publication and mention of the grant of the patent: **11.03.2026**
(21) Application number: 23305229.9
(22) Date of filing: 22.02.2023
(51) Int. Cl.: H04B 10/272, G06N 3/02, H04Q 11/00

(54) **METHOD AND SYSTEM FOR UPDATING PARAMETERS OF NEURAL NETWORKS IN AN OPTICAL FIBER NETWORK**
VERFAHREN UND SYSTEM ZUR AKTUALISIERUNG VON PARAMETERN NEURONALER NETZWERKE IN EINEM GLASFASERNETZWERK
PROCÉDÉ ET SYSTÈME DE MISE À JOUR DE PARAMÈTRES DE RÉSEAUX NEURONAUX DANS UN RÉSEAU À FIBRES OPTIQUES

(43) Date of publication of application: 28.08.2024
(73) Proprietor: Nokia Solutions and Networks Oy, 02610 Espoo (FI)
(72) Inventor: DUPAS, Arnaud, 91650 BREUILLET (FR); LAYEC, Patricia, 92220 BAGNEUX (FR)
(74) Representative: Novagraaf Technologies

(56) References cited:
- CN-A- 114 338 292
- US-A1- 2022 239 371
- US-A1- 2022 261 686
- US-B1- 10 171 161

## Description

### TECHNICAL FIELD

Various example embodiments relate generally to a method and system for updating parameters of neural networks in an optical fiber network.

### BACKGROUND

Neural Networks (NN) are widely used in the Telecom industry. They have a multi-layer structure with neurons that need to be trained by a training dataset to obtain a good performance.

In an optical fiber network like a core network or a metro network, with many network nodes, if many NN are present, all need to be trained or a copy of one trained NN is send through the network. In both cases, a lot of data is used and transported inside the network, leading to a high bandwidth requisition and potentially causing traffic interruption.

US2022239371A1 relates to a training solution for a neural network (NN) for signal processing in optical communication. US2022261686A1 relates to systems and methods for network system modeling using nested models combining machine learning and behavioral approaches. US10171161B1 relates to link parameter identification in an optical communications system or network using trained artificial neural networks.

### SUMMARY

The scope of protection is set out by the appended claims. The embodiments, examples and features, if any, described in this specification that do not fall under the scope of protection of the independent claims are to be interpreted as examples useful for understanding the various embodiments or examples that fall under the scope of protection.

According to a first aspect, a method for use in an optical fiber network comprising a master node and slave nodes is disclosed. The method comprises: at the master node, obtaining parameters of a neural network to compute an optical launch power for an optical fiber link; from the master node, sending the parameters via the optical fiber network to some of the slave nodes, each one of the slave nodes supporting a neural network for computing an optical launch power of, at least, one optical fiber link having an end at the one of the slave nodes; and at the some of the slave nodes, updating the neural network supported therein based on the parameters sent by the master node.

The act of obtaining the parameters includes, at the master node, training the neural network to compute an optical launch power for an optical fiber link.

The act of obtaining the parameters is based on, at least partially, on information received from one or more of the slave nodes, the information indicating the optical launch power adjustments performed by the one or more of the slave nodes on the basis of outputs of the neural network supported therein.

The sending may include transmitting the parameters over the optical fiber network in a broadcast message having a header identifying the some of the slave nodes.

The sending may be performed without interrupting user and control plane traffic through the optical fiber network.

The sending may specify an order in which corresponding ones of the parameters are to be replaced in the neural networks supported by the some of the slave nodes.

The some of the slave nodes may be configured to operate the neural networks supported therein without performing training of said neural networks.

According to another aspect a system comprises: an optical fiber network comprising network nodes and optical fiber links having ends at the network nodes, one of the network nodes being a master node and others of the network nodes being slave nodes of the master node; wherein the master node has electronic processing hardware configured to obtain parameters of a neural network to compute an optical launch power for an optical fiber link; wherein the master node is configured to send the parameters via the optical fiber network, to some of the slave nodes; wherein each one of the slave nodes includes electronic processing hardware to support a neural network for computing an optical launch power of one or more fiber links ending at the one of the slave nodes; and wherein the some of the slave nodes are configured to update the neural network supported therein in response to receiving the parameters sent by the master node.

The master node is configured to obtain the parameters by training a neural network supported by the electronic processing hardware thereof to compute an optical launch power for an optical fiber link.

The master node is configured to obtain the parameters based on, at least in part, on information received by the master node from one or more of the slave nodes, the information being indicative of optical launch power adjustments performed by the one or more of the slave nodes on the basis of outputs of the neural network supported therein.

The master node may be configured to transmit the obtained parameters over the optical fiber network in a broadcast message having a header identifying the some of the slave nodes.

The master node may specify an order in which corresponding ones of the parameters are to be replaced in the neural networks supported by the some of the slave nodes in a message thereto.

The some of the slave nodes are configured to operate the neural networks supported therein without performing training of said neural networks.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG. 1 is a schematic diagram of an optical fiber communication system according to an example.
FIG. 2 shows a flowchart of a method for updating NN parameters in network nodes according to an example scenario; for example, in some embodiments of the optical fiber communication system of FIG. 1.
FIG. 3A-3B illustrate the update of parameters of a NN according to an example; for example, in some embodiments of the method of FIG. 2 or 5.
FIG. 4A illustrates the format of an update request according to an example; for example, in some embodiments of the method of FIG. 2 or 5.
FIG. 4B illustrates the format of an update request according to another example; for example, in some embodiments of the method of FIG. 2 or 5.
FIG. 5 shows a flowchart of a method for updating NN parameters in network nodes according to one or more examples; for example, in some embodiments of the optical fiber communication system of FIG. 1.
FIG. 6 is a block diagram illustrating an exemplary hardware structure of an apparatus according to an example; for example, in some embodiments of the optical fiber communication system of FIG. 1.

It should be noted that these drawings are intended to illustrate various aspects of devices, methods and structures used in example embodiments described herein. The use of similar or identical reference numbers in the various drawings is intended to indicate the presence of a similar or identical element or feature.

### DETAILED DESCRIPTION

Detailed example embodiments are disclosed herein. However, specific structural and/or functional details disclosed herein are merely representative for purposes of describing example embodiments and providing a clear understanding of the underlying principles. However these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

A method to update the NNs used in an optical fiber network with low bandwidth consumption is disclosed. The method is implemented in a distributed architecture relying on a master node and slave nodes. Each of the master node and slave nodes supports a neural network, NN, for computing an optical launch power of, at least, one optical fiber link having an end at the concerned node. The master node obtains the values of the parameters of the NN to be updated. The master node sends the parameters via the optical fiber network to some of the slave nodes, each one of the slave nodes

The NN may be configured to determine the adjustment power to be applied to the optical launch power for an optical fiber link. In an optical fiber network with many nodes and many optical fiber links, each node can embed electronic processing hardware to support such a NN. Each of these NN needs to be trained to obtain good results and the training requires a large amount of training data. In the case of optimal launch power determination, adjusting the parameters of the NN requires to analyze the optical spectra in a given spectral band, for example from a spectrum analyzer, or power spectral density data from coherent receivers. The more relevant training data the NN have, the more accurate the NN prediction becomes.

This optical launch power may be determined so as to avoid optical non linearities that could deteriorate the quality of transmission in the optical fiber and at the same time maximize the optical launch power in the optical linear domain. A NN may be trained and validated on the basis for example of a comparison with a normalized optical PSD (Power Spectral Density) to detect non-linearities in the optical fiber and to determine a resulting error (e.g. the MSE, Mean Square Error). After retraining of the NN, if the new resulting error with the re-trained NN is lower, an update of the neural networks in the master and/or slave nodes may be triggered.

An optimal launch optical power for optical fiber links may be determined using a NN model as described for example in M. Lonardi et al., « Power spectral density estimation in dispersion unmanaged coherent metro networks", M1I.3, OFC 2019.

At the output of the NN, a value is produced that may represent a power adjustment to be applied the currently used optical launch power.

In the context of optical fiber networks, a degradation of an initial optical signal used in an optical fiber link (e.g. for establishing a light path) may have an impact on the optical signals derived from this initial optical signal when the initial optical signal is retransmitted (e.g. after amplification) via other network nodes and other optical fiber links. Therefore a central analysis that takes into account the quality or degradation of optical signals in interconnected optical fiber links allows to determine if a given network node has an impact on neighbor network nodes and to determine for which optical fiber link(s) the optical launch power has to be corrected and how. This analysis can be done based on the outputs of the NN implemented by the concerned network nodes.

To avoid multiple trainings at each network node, a centralized training, analysis, validation and control of the parameters of the NN is implemented by a network entity, referred to herein as the training and analytics entity. The training and analytics entity includes means for performing functions (e.g. training functions and / or analytics functions, communication functions) defined herein for the training and analytics entity. The training and analytics entity may be included in a master node or be implemented in another network entity, e.g. in a server, that is operatively connected to the master node.

This analytic training and analytics entity is configured to collect and store data (e.g. output data) from the NNs in the master node and slave nodes so as to perform analysis, training and update of the parameters of the NNs to be used in the master node and slave nodes. The training and analytics entity may be operatively connected only to the master node which is then operatively connected to other slave nodes to collect these data. When the NNs in the master node and slave nodes are updated based on the parameters determined by the training and analytics entity, the training and analytics entity receives confirmation information from the nodes and knows where in the network the NN are currently up-to-date and where optimal launch power is applied. This process (including data collection, analysis, training, updating) can be repeated as necessary.

Further, to avoid transmission of a huge amount of data including a copy of the updated NN, a protocol (referred to herein as the NN protocol or NNP) is used to allow for a distributed coordination of parameters of NNs used by several network nodes in the optical fiber network in accordance with the centralized training, validation and control of the parameters of the NN performed by the training and analytics entity.

NN parameters distribution is performed by a master node for slave nodes that are configured to update their respective NN using the received NN parameters, e.g. without sending a copy of the all the structure / function of the updated NN. This can be done without interruption of service (e.g. without interruption of control plane and user plane traffic).

Messages between the master node and slave nodes may be implemented according to the NNP. The communication functions between master node and slave nodes disclosed herein for each node may be implemented by dedicated agents (referred to herein as NN agents or NN protocol agents) located inside the concerned node. Each NN agent is configured to implement the NN protocol on master node side or slave node side.

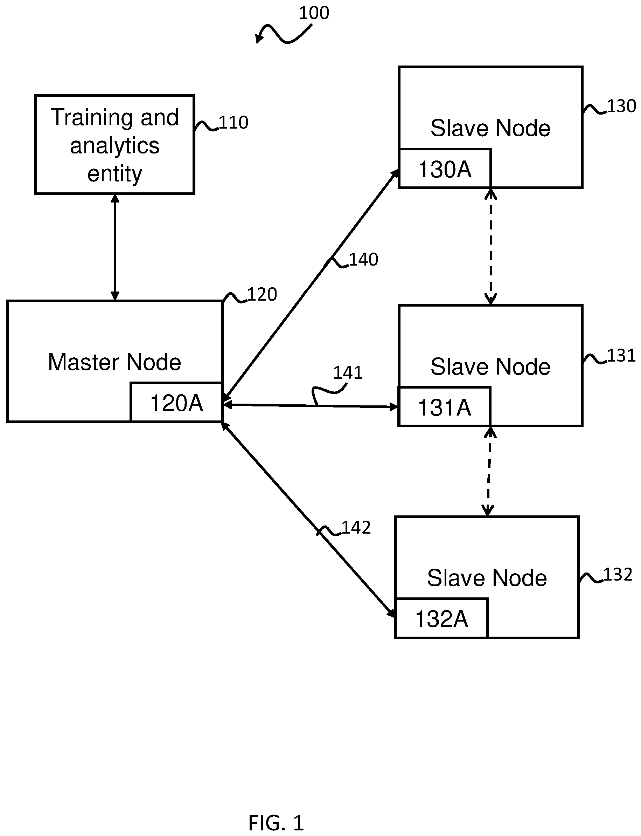

FIG. 1 is a schematic diagram of an optical fiber communication system 100 according to an example.

The communication system 100 includes network nodes 120, 130, 131, 132 of an optical fiber network. Each network node may correspond to any type of Network Element (e.g, Optical Line Terminal (OLT), Optical Network Unit (ONU)) or an edge node. Each network node 120, 130, 131, 132 is configured to implement a NN for determining an optical launch power for an optical fiber link 140, 141, 142 having an end at the concerned network node. The NN of a network node may be supported by electronic processing hardware of the network node.

In some embodiments the NNs implemented by the network nodes 120, 130, 131, 132 are the same (e.g. they are based on the same NN model) but the parameters (e.g. weights and biases at each layer, activation function to be used) of the NN may be different for each of these NN.

Among those network nodes, the node 120 is a master node and the nodes 130, 131, 132 are slave nodes. For simplification reasons only 3 slave nodes are represented but the optical fiber network may include more or less slave nodes.

Each node 120, 130, 131, 132 includes a corresponding agent 120A, 130A, 131A, 132A. An agent may correspond to means (e.g. software and / or firmware and / or hardware) for performing the functions disclosed herein for the concerned agent.

Two types of agents are used: the agent (referred to herein as the master node agent) of a master node has different functionalities than the agent (referred to herein as the slave node agent) of a slave node. In a given area of an optical fiber network, only one node may be configured as master node with a master node agent and the other nodes may be configured as slave nodes with a respective slave node agent.

A master node agent 120A is configured to send requests (e.g. update requests) to the slave node agents 130A, 131A, 132A. Each of the slave node agents 130A, 131A, 132A is configured to perform actions on request of a master node agent 120A and to provide feedback to the requesting master node agent. A slave node agent does not communicate with another slave not agent, only with the master node agent associated with this slave node agent.

The communication system 100 also includes a training and analytics entity 110. In one or more embodiments, the training and analytics entity is part of the network node configured as master node. The training and analytics entity 110 is configured to communicate with one or more master nodes, e.g. with a master node agent of one or more master nodes. The master node agent is configured to provide feedback to the training and analytics entity, this feedback may include feedback received from the slave nodes and/or feedback from the master node itself.

The training and analytics entity 110 is configured to train one or more NN and to perform analysis of feedback received from network nodes through the master node agent for the NN implemented by the concerned network nodes. For example the training and analytics entity 110 is configured to determine if training of a NN is necessary and / or if parameter(s) of NN used by the master and / or slave nodes need to be updated. The training and analytics entity 110 is configured to send parameters of NN to a master node agent, the recipient master node agent being configured to send the received parameters to the slave node agents of the concerned slave nodes.

The communication between master node agent and slave node agents is implemented through the optical fiber network. The communication between master node agent and slave node agents may use a user plane and / or control plane established through the optical fiber network. The messages (including update requests, confirmation messages, reporting messages, acknowledgments, etc) sent between a master node agent and slave node agent(s) and / or between the master node agent and the training and analytics entity correspond to the implementation of a protocol, that is referred to herein as the NN protocol, NNP.

A master node agent is configured to relay NNP messages from the training and analytics entity to the slave node agents and inversely to relay NNP messages from the slave node agents to the training and analytics entity. A master node agent may be seen as a proxy agent or communication relay for its associated slave node agents with respect to the training and analytics entity 110.

A master node agent may send a NNP message to only one slave node or send a NNP message to a plurality of slave nodes, in a broadcast or multicast distribution mode.

After receipt of NN parameters from the training and analytics entity, a master node agent may be configured to send a confirmation message to the training and analytics entity when the update of its NN is completed. Likewise, after receipt of an update request with NN parameters, a slave node agent may be configured to send a confirmation message to the master node agent when the update of its NN is completed. A confirmation message may include confirmation information indicating that the update of the concerned NN is completed for the concerned node.

After receipt of NN parameters from the training and analytics entity, a master node agent may be configured to send a reporting message to the training and analytics entity when the update of a NN of the master node is completed and the updated NN has been run to compute new optical launch power adjustment value(s). Likewise, a slave node agent may be configured to send a reporting message to its master node agent when the update of the NN of the slave node is completed and the updated NN has been run to compute new optical launch power adjustment value(s). The master node agent may be configured to forward the content of the reporting messages received from one or more slave nodes to the training and analytics entity.

A reporting message from a given node may include feedback information on an optical launch power adjustment performed by the concerned node on the basis of an output of the neural network implemented by the concerned node the reporting message. The feedback information may include one or more output values of the NN implemented by the master node, each output value corresponds for example to correction amount to be applied to the optical launch power. Such reporting message may be sent at regular time intervals and / or on request from the master node agent and / or from the training and analytics entity.

The training and analytics entity may perform analysis on the basis of the confirmation messages and feedback messages to determine for example how many time it took to update a NN in the master node and / or in slave node(s); determine whether there are fluctuations in the optical launch power adjustment value(s) generated by a NN, where the fluctuations are indicative of a lack of stability issue; determine which nodes are impacted by such lack of stability issue and/or for which nodes an adjustment of NN parameters may be needed.

In details, a master node may be configured, e.g. with a master node agent, to implement one or more of the below functions:
- implementing a NN for the network node, the NN may be a copy of a NN function validated by the training and analytics entity;
- receiving an update request from the training and analytics entity when an update of one or more NN has to be done, the update request including values of NN parameters to be updated at the master node;
- updating or controlling the update of the NN in the master mode based on NN parameters included in an update request received from the training and analytics entity;
- sending to the training and analytics entity a confirmation message when its NN is up to date in the master mode;
- sending to the training and analytics entity one or more feedback messages to the training and analytics entity when the updated NN has been used to compute new optical launch power adjustment value(s);
- sending an update request to slave nodes when an update of one or more NN has to be done, the update request including values of NN parameters to be updated at the slave node;
- receiving from slave node(s) an acknowledgement message when the slave node has received the update request;
- receiving from slave node(s) a confirmation message when a NN has been updated in the slave node;
- receiving from slave node(s) a feedback message when the updated NN in the slave node has been used to compute new optical launch power adjustment value(s);
- forwarding any message (e.g. acknowledgement message, confirmation message, feedback message) received from a slave node to the training and analytics entity;
- collecting output values (e.g. optical launch power adjustment value(s)) of the NN implemented by several slave nodes and transferring the collected output values to the training and analytics entity for analysis (e.g. statistics and/or training and/or validation).

A slave node may be configured, e.g. with a slave node agent, to implement one or more of the below functions:
- implementing a NN for the network node, the NN may be a copy of a NN function validated by the training and analytics entity;
- receiving a received NNP message (e.g. an update request); checking if a received NNP message (e.g. an update message) destination corresponds to its node identity; if not the NNP message is not for the slave node, discarding the NNP message and otherwise, performing at least one action based on the received NNP message;
- receiving an update request from a master node when an update of one or more NN has to be done, the update request including values of NN parameters to be updated at the slave node;
- decoding an update request received from a master node;
- updating or controlling the update of the NN in the slave mode based on NN parameters included in an update request received from the master node;
- sending to the master node an acknowledgement message when the slave node has received the update request;
- sending to the master node a confirmation message when the NN has been updated in the slave node;
- sending to the master node a feedback message when the updated NN in the slave node has been used to compute new optical launch power adjustment value(s);

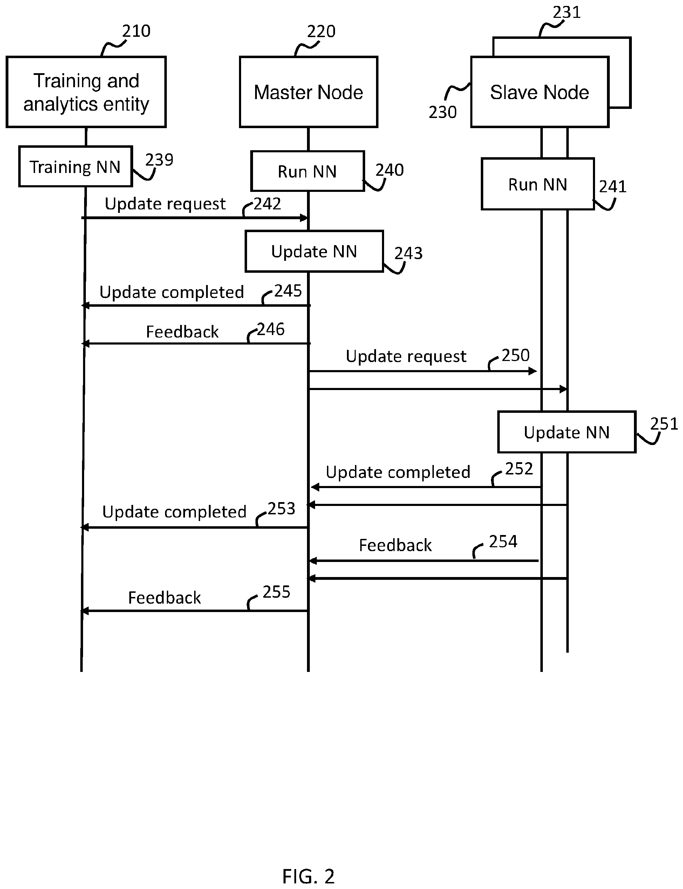

FIG. 2 shows a flowchart of a method for updating NN parameters in network nodes according to an example scenario.

The steps of the method may be implemented by a training and analytics entity 210, a master node 220 and one or more slave nodes 230, 231 according to any example described herein, for example by reference to FIG. 1. While the steps are described in a sequential manner, the man skilled in the art will appreciate that some steps may be omitted, combined, performed in different order and / or in parallel.

In step 239, the training and analytics entity 210 performs training of a NN to update parameters of a NN.

In step 240, the master node 220 implements a NN. The NN may be a copy of a NN function validated by the training and analytics entity 210.

In step 241, each of the slave nodes 230, 231 implements a NN. The NN may be a copy of a NN function validated by the training and analytics entity 210.

In step 242, the master node 220 receives an update request from the training and analytics entity 210 when an update of one or more NN has to be done, the update request including values of NN parameters to be updated at the master node.

In step 243, the master node 220 updates the NN in the master mode based on NN parameters included in an update request received from the training and analytics entity.

In step 245, the master node 220 sends to the training and analytics entity a confirmation message when its NN is up to date in the master mode.

In step 246, the master node 220 sends to the training and analytics entity one or more feedback messages when the updated NN has been used to compute new optical launch power adjustment value(s).

In step 250, the master node 220 sends an update request to some of the slave nodes when an update of one or more NN has to be done, the update request including values of NN parameters to be updated at the slave node.

In step 251, the recipient slave node 220 updates the NN in the slave node based on NN parameters included in an update request received from the master node.

In step 252, the master node 220 receives from slave node(s) a confirmation message when a NN has been updated in the slave node.

In step 253, the master node 220 forwards any confirmation message received from a slave node to the training and analytics entity.

In step 254, the master node 220 receives from slave node(s) a feedback message when the updated NN in the slave node has been used to compute new optical launch power adjustment value(s).

In step 255, the master node 220 forwards any feedback message received from a slave node to the training and analytics entity.

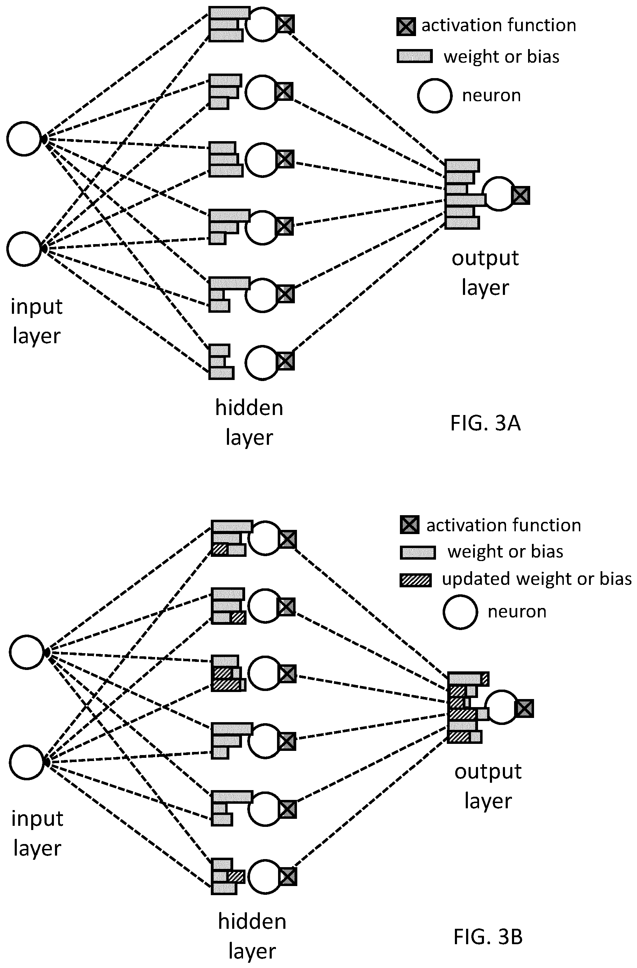

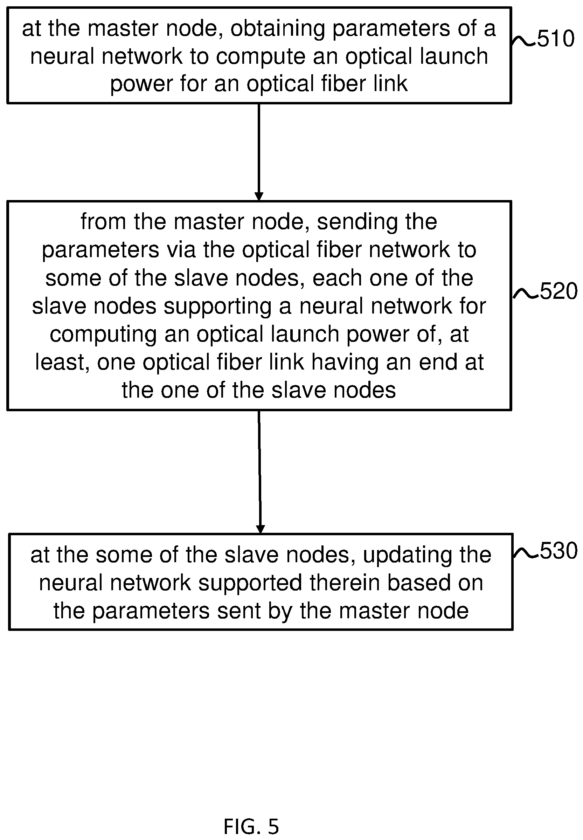

FIG. 3A-3B illustrate the update process of parameters of a NN according to an example that may be used in the methods disclosed by reference to FIG. 2 or 5, for example in step 243, 251 or 530

A standard Neural Network, NN, is composed of neurons organized in different layers: one input layer, one or many hidden layers, and one output, that may be, in the example use case, the optical launch power adjustment value.

A simplified example of a neural network is represented in FIGS. 3A-3B. FIG. 3A shows the neural network after an initial training phase having a regression index of 0.90. FIG. 3B shows the same neural network after an additional training phase which results in a better performance, here with an increased regression index of 0.96. The regression index is the difference between the actual output value of the neural network (the result) and the prediction. The regression index gives a confidence index of the neural network with respect to the received data and all the data used before for the training. With an index of 1 (or 100%), the confidence is maximum, the NN is well trained, and real data correspond well to the NN model.

In both figures 3A-3B, the simplified NN includes an input layer including 2 neurons, a hidden layer including 6 neurons and one neuron for the output layer, each neuron being represented by a circle. The connections between the neurons are represented by dotted lines.

Each neuron is associated with a set of parameters that may include:
- weights and/or bias that are associated with the connections of this neuron with neurons of the previous layer;
- parameter(s) and / or type of the activation function (e.g. sigmoid function, hyperbolic tangent function, Rectified Linear Unit, etc) at the output of the neuron.

Each weight and/or bias may have a value between -1 and +1. The horizontal bars (forming histograms) on the left of each neuron represent the weights and bias associated with the connections of this neuron with neurons of the previous layer, where the length of a bar represents the value of the corresponding weight on a given scale. Likewise the square with a X inside on the right of the neuron represents the activation function.

To be able to update the NN without interrupting the use of the NN (and also without traffic interruption), the update process performed for updating the NN may work as follows.

In the case of an update of an existing NN in a node, and especially when only a few neurons need to be updated, not all information needs to be sent in most cases. Only new parameters (weights and / or bias) per neuron may be sent.

A fine analysis of the NN allows to identify which parameters have to be changed (increased or decreased) for which neuron and need to be sent by the training and analytics entity to a master node or slave node. This is illustrated using rectangles with hatching in FIG. 3B: these hatched rectangles represent the target value for the weight or bias represented by a grey rectangle. In this example, the update of the neural network requires to send only the new parameters. This may be done using the NN Protocol as disclosed herein.

Further, a node may be configured to update a parameter of the NN in a progressive manner, by progressively (e.g. step by step) modifying the value of the concerned parameter from its current value until the value of this parameter is equal to the parameter value received in the update request. This allows to avoid sudden modification of the optical launch power and any instability that could result from such a sudden modification.

In addition, the order in which the parameters are updated may be specified in the update request. This allows to adjust the values of the parameters to be updated in an order that would not cause undesirable fluctuations of the optical launch power determined on the basis of the concerned NN.

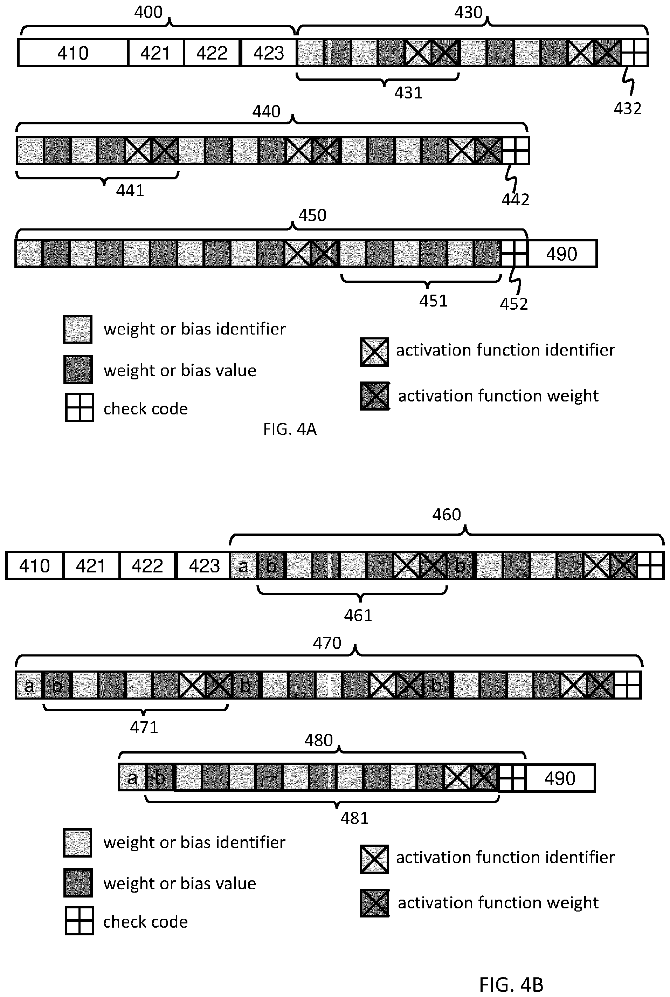

FIGS. 4A and 4B shows a format that may be used for an update request including NN parameters according to an example. These update requests that may be used in the methods disclosed herein, e.g. by reference to FIG. 2 or 5, for example in step 242, 250 or 520.

As illustrated by FIGS. 4A and 4B, the NNP messages between master and slave nodes may include a header 400. The header may include an identifier 421 of the destination network node and / or identifier 422 of the source network node source NN. The header may contain a protocol identification code 410 to indicate that the message is in accordance with a NN protocol. The NNP message may include an end data field 490 indicative of the end of the NNP messages.

The header of the message may include an identifier 423 of a message type. A message type may be used to identify one of the following actions:
- UPDATE: the message is an update request that contains the values of the neurons parameters to be updated;
- ACK: the message is an acknowledgment message that signifies that a previous message (e.g. an update request) has been well received;
- COMPLETED: the message is a confirmation message that signifies that the update of a NN has been completed based on the last update request;
- OUTPUT: the message is a feedback message including one or more NN output values, like an optical launch power adjustment value (delta of power to be applied);

For an update request sent according to the NNP, the update request may include parameters per layer and per neuron of the NN. In the update request the parameters may be ordered layer by layer (e.g. according to the order of the layers in the NN) and for each layer, neuron by neuron.

For example, for a given layer 430, 440, 450, the update request may include: a number of neurons to be updated in the concerned layer. Then per neuron to be updated the update request may include a data field 431, 441, 451 specific to this neuron.

The data field 431, 441, 451 specific to a neuron may include the parameters of the neuron to be updated. The data field 431, 441, 451 specific to a neuron may include an identifier of the neuron, a number of parameters to be updated, an identifier of each parameter to be updated and the value of the identified parameter. In the data field 431, 441, 451 specific to this neuron, the parameters to be updated may be ordered according to the order in which these parameters have to be updated. If all parameters in a neuron need to be updated, a specific code may be included in the data field 431, 441, 451 specific to this neuron, for example '0'.

A NNP message may include one or more check codes 432, 442, 452 (checksum code, or CRC codes like in Ethernet) are transported in the message to verify at the reception that parameters are valid and have not been corrupted during transport. A check code per layer may be used.

FIG. 4B shows another format that may be used for an update request including NN parameters according to an example.

This format is the same as the one disclosed in FIG. 4A but here additional data fields (a) and (b) are added. The first data field (a) may include for each layer 460, 470, 480 an ordered list of neurons to be updated. For each neuron to be updated, a second data field (b) may include an ordered list of parameters to be updated including a number of parameters to be updated and an identifier of each parameter to be updated, the value of the identified parameter being given in the data field 461, 471, 481specific to the concerned neuron.

In the recipient node (slave node or master node), the list of parameters to be updated is scanned and the concerned parameters are updated progressively, e.g. step by step, with a small time step for example, leading to a smooth transition from the initial state of the NN to the final state. This step-by-step update process may be used in the methods disclosed herein, e.g. by reference to FIG. 2 or 5, for example in step 243, 251 or 530. The NN service is not interrupted during this transition from the initial state of the NN to the final state and the global performance of the NN is increased progressively. Data traffic (e.g. user plane and / or control plane traffic) is also not interrupted.

FIG. 5 shows a flowchart of a method for use in an optical fiber network comprising a master node and slave nodes according to one or more examples. Each one of the slave nodes supports a neural network for computing an optical launch power of, at least, one optical fiber link having an end at the one of the slave nodes.

The steps of the method may be implemented by node of an optical fiber network according to any example described herein, for example by reference to FIGS. 1 and / or 2. While the steps are described in a sequential manner, the man skilled in the art will appreciate that some steps may be omitted, combined, performed in different order and / or in parallel.

In step 510, the master node obtains parameters of a neural network to compute an optical launch power for an optical fiber link.

Obtaining the parameters includes, at the master node, training the neural network to compute an optical launch power for an optical fiber link.

Obtaining the parameters is based on, at least partially, on information received from one or more of the slave nodes, the information indicating the optical launch power adjustments performed by the one or more of the slave nodes on the basis of outputs of the neural network supported therein.

Obtaining the parameters may include steps like step 242 of the method of FIG. 2 in which the master node 220 receives an update request from the training and analytics entity 210 when an update of one or more NN has to be done.

In step 520, the master node sends the parameters via the optical fiber network to some of the slave nodes.

Sending the parameters via the optical fiber network may include transmitting the parameters over the optical fiber network in a broadcast message having a header identifying the concerned slave nodes to which the parameters via the optical fiber network are sent.

The parameters may be NN parameters to be used in replacement of corresponding parameters of a neural network that is implemented by a recipient slave node and is configured to compute optical launch power for a light path.

Sending the parameters via the optical fiber network may be performed without interrupting user and control plane traffic through the optical fiber network.

Sending the parameters via the optical fiber network may include specifying an order in which corresponding ones of the parameters are to be replaced in the neural networks supported by the some of the slave nodes.

In step 530, each of the recipient slave node updates the neural network supported therein based on the parameters sent by the master node.

Some of the slave nodes may be configured to operate the neural networks supported therein without performing training of said neural networks.

In the method of FIG. 5, further messages may be sent. Example messages that may be used are disclosed for example by reference to FIG. 1 or 2. For example, the master node may send to the training and analytics entity a confirmation message when its NN is up to date in the master mode (see step 245).

For example, the master node may send to the training and analytics entity one or more feedback messages when the updated NN has been used to compute new optical launch power adjustment value(s) (see step 245).

For example, the master node may receive from slave node(s) a confirmation message when a NN has been updated in the slave node (see step 252).

For example, the master node may forward any confirmation message received from a slave node to the training and analytics entity (see step 253).

For example, the master node may receive from slave node(s) a feedback message when the updated NN in the slave node has been used to compute new optical launch power adjustment value(s) (see step 254).

For example, the master node may forward any feedback message received from a slave node to the training and analytics entity (see step 254).

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although a flow chart may describe operations as a sequential process, many of the operations may be performed in parallel, concurrently or simultaneously. Also some operations may be omitted, combined or performed in different order. A process may be terminated when its operations are completed but may also have additional steps not disclosed in the figure or description. A process may correspond to a method, function, procedure, subroutine, subprogram, etc. When a process corresponds to a function, its termination may correspond to a return of the function to the calling function or the main function.

Each described function, engine, block, step described herein can be implemented in hardware, software, firmware, middleware, microcode, or any suitable combination thereof.

When implemented in software, firmware, middleware or microcode, instructions to perform the necessary tasks may be stored in a computer readable medium that may be or not included in a host device or host system. The instructions may be transmitted over the computer-readable medium and be loaded onto the host device or host system. The instructions are configured to cause the host device or host system to perform one or more functions disclosed herein. For example, as mentioned above, according to one or more examples, at least one memory may include or store instructions, the at least one memory and the instructions may be configured to, with at least one processor, cause the host device or host system to perform the one or more functions. Additionally, the processor, memory and instructions, serve as means for providing or causing performance by the host device or host system of one or more functions disclosed herein.

The host system may be a general-purpose computer and / or computing system, a special purpose computer and / or computing system, a programmable processing system, a communication network, a set of devices, etc. The host device may be or include or be part of: a user equipment, client device, mobile phone, laptop, computer, network element, data server, network resource controller, network apparatus, router, gateway, network node, computer, cloud-based server, web server, application server, proxy server, etc.

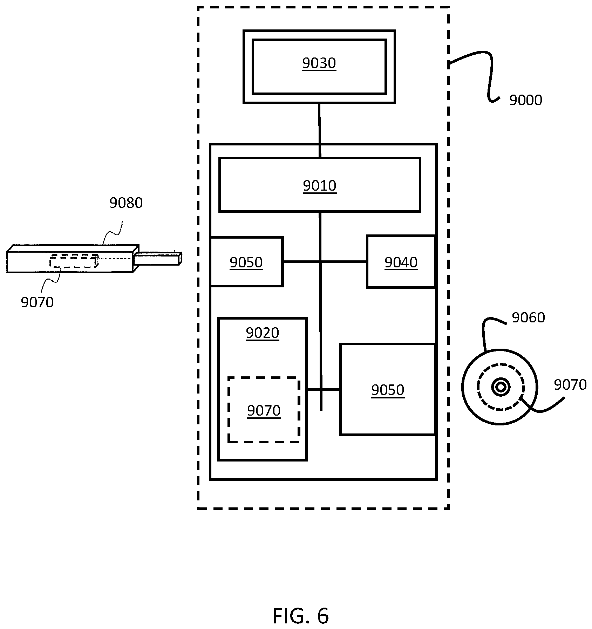

FIG. 6 illustrates an example embodiment of an apparatus 9000. The apparatus 9000 may be network node as disclosed herein. The apparatus 9000 may be used for performing one or more or all steps of a method disclosed herein. The apparatus 9000 may be used for implementing one or more functions disclosed herein for a master node and / or a slave node and / or a training and analytics entity.

As represented schematically by FIG. 6, the apparatus 9000 may include at least one processor 9010 and at least one memory 9020. The apparatus 9000 may include one or more communication interfaces 9040 (e.g. network interfaces for access to a wired / wireless network, including Ethernet interface, WIFI interface, etc) connected to the processor and configured to communicate via wired / non wired communication link(s). The apparatus 9000 may include user interfaces 9030 (e.g. keyboard, mouse, display screen, etc) connected with the processor. The apparatus 9000 may further include one or more media drives 9050 for reading a computer-readable storage medium (e.g. digital storage disc 9060 (CD-ROM, DVD, Blue Ray, etc), USB key 9080, etc). The processor 9010 is connected to each of the other components 9020, 9030, 9040, 9050 in order to control operation thereof.

The memory 9020 may include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory 9020 may be configured to store, amongst other things, an operating system of the apparatus 9000 and / or one or more computer program code of one or more software applications. The RAM of the memory 9020 may be used by the processor 9010 for the temporary storage of data.

The processor 9010 may be configured to store, read, load, execute and/or otherwise process instructions 9070 stored in a computer-readable storage medium 9060, 9080 and / or in the memory 9020 such that, when the instructions are executed by the processor, causes the apparatus 9000 to perform one or more or all steps of a method described herein for the concerned apparatus 9000.

The instructions may correspond to program instructions or computer program code. The instructions may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a defined logic. Other hardware, conventional or custom, may also be included. A processor or processing circuit may be configured to execute instructions adapted for causing the host device or host system to perform one or more functions disclosed herein for the host device or host system.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may include one or more storage device like a permanent mass storage device, magnetic storage medium, optical storage medium, digital storage disc (CD-ROM, DVD, Blue Ray, etc), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid state drive (SSD), a memory card, a core memory, a flash memory, or any combination thereof.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc. The means may include at least one processor and at least one memory including computer program code, wherein the at least one memory and the computer program code are configured to, with the at least one processor, cause an apparatus or system to perform the concerned function(s).

As used in this application, the term "circuitry" may refer to one or more or all of the following:
(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device.

The term circuitry may cover digital signal processor (DSP) hardware, network processor, application specific integrated circuit (ASIC), field programmable gate array (FPGA), etc. The circuitry may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

The circuitry may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via one or more communication networks.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present disclosure as determined based upon the claims.

### LIST OF MAIN ABBREVIATIONS

NN: Neural Network
NNP: Neural Network Protocol
MSE: Mean Square Error

## Claims

1. A method for use in an optical fiber network comprising a master node and slave nodes, the method comprising:
at the master node, obtaining (510) parameters of a neural network to compute an optical launch power for an optical fiber link;
from the master node, sending (520) the parameters via the optical fiber network to some of the slave nodes, each one of the slave nodes supporting a neural network for computing an optical launch power of, at least, one optical fiber link having an end at the one of the slave nodes; and
at the some of the slave nodes, updating (530) the neural network supported therein based on the parameters sent by the master node;
wherein the act of obtaining the parameters includes, at the master node, training the neural network to compute an optical launch power for an optical fiber link,
wherein the act of obtaining the parameters is based on, at least partially, on information received from one or more of the slave nodes, the information indicating the optical launch power adjustments performed by the one or more of the slave nodes on the basis of outputs of the neural network supported therein.

2. The method of claim 1, wherein the sending includes transmitting the parameters over the optical fiber network in a broadcast message having a header identifying the some of the slave nodes.

3. The method of any of claims 1 to 2, wherein the sending is performed without interrupting user and control plane traffic through the optical fiber network.

4. The method of any of claims 1 to 3, wherein the sending specifies an order in which corresponding ones of the parameters are to be replaced in the neural networks supported by the some of the slave nodes.

5. The method of any of claims 1 to 4, wherein the some of the slave nodes are configured to operate the neural networks supported therein without performing training of said neural networks.

6. A system, comprising:
an optical fiber network comprising network nodes and optical fiber links having ends at the network nodes, one of the network nodes being a master node (120) and others of the network nodes being slave nodes (130-132) of the master node; and
wherein the master node (120) has electronic processing hardware configured to obtain (510) parameters of a neural network to compute an optical launch power for an optical fiber link; and
wherein the master node (120) is configured to send (520) the parameters via the optical fiber network, to some of the slave nodes; and
wherein each one of the slave nodes (130-132) includes electronic processing hardware to support a neural network for computing an optical launch power of one or more fiber links ending at the one of the slave nodes; and
wherein the some of the slave nodes (130-132) are configured to update (530) the neural network supported therein in response to receiving the parameters sent by the master node,
wherein the master node is configured to obtain the parameters by training a neural network supported by the electronic processing hardware thereof to compute an optical launch power for an optical fiber link,
wherein the master node is configured to obtain the parameters based on, at least in part, on information received by the master node from one or more of the slave nodes, the information being indicative of optical launch power adjustments performed by the one or more of the slave nodes on the basis of outputs of the neural network supported therein.

7. The system of claim 6, wherein the master node is configured to transmit the obtained parameters over the optical fiber network in a broadcast message having a header identifying the some of the slave nodes.

8. The system of any of claims 6 to 7, wherein the master node specifies an order in which corresponding ones of the parameters are to be replaced in the neural networks supported by the some of the slave nodes in a message thereto.

9. The system of any of claims 6 to 8, wherein the some of the slave nodes are configured to operate the neural networks supported therein without performing training of said neural networks.

## Patentansprüche

1. Verfahren zur Verwendung in einem Glasfasernetzwerk, das einen Masterknoten und Slaveknoten umfasst, wobei das Verfahren Folgendes umfasst:
Erhalten (510) von Parametern eines neuronalen Netzwerks am Masterknoten zum Berechnen einer optischen Startleistung für eine Glasfaserverbindung;
Senden (520) der Parameter vom Masterknoten via das Glasfasernetzwerk zu einigen der Slaveknoten, wobei jeder der Slaveknoten ein neuronales Netzwerk zum Berechnen einer optischen Startleistung von mindestens einer Glasfaserverbindung mit einem Ende an dem einen der Slaveknoten unterstützt; und
Aktualisieren (530) des darin unterstützten neuronalen Netzwerks an einigen der Slaveknoten auf Basis der vom Masterknoten gesendeten Parameter;
wobei die Aktion des Erhaltens der Parameter am Masterknoten das Trainieren des neuronalen Netzwerks zum Berechnen einer optischen Startleistung für eine Glasfaserverbindung beinhaltet,
wobei die Aktion des Erhaltens der Parameter mindestens teilweise auf Informationen basiert, die von einem oder mehreren der Slaveknoten empfangen werden, wobei die Informationen die Anpassungen der optischen Startleistung anzeigen, die von dem einen oder den mehreren der Slaveknoten auf Basis von Ausgaben des darin unterstützten neuronalen Netzwerks durchgeführt wurden.

2. Verfahren nach Anspruch 1, wobei das Senden das Übertragen der Parameter über das Glasfasernetzwerk in einer Broadcastnachricht mit einem Header, der die einigen der Slaveknoten identifiziert, beinhaltet.

3. Verfahren nach einem der Ansprüche 1 bis 2, wobei das Senden ohne Unterbrechen eines Benutzer- und Steuerebenenverkehrs durch das Glasfasernetzwerk durchgeführt wird.

4. Verfahren nach einem der Ansprüche 1 bis 3, wobei das Senden eine Reihenfolge spezifiziert, in der entsprechende der Parameter in den neuronalen Netzwerken, die von den einigen der Slaveknoten unterstützt werden, zu ersetzen sind.

5. Verfahren nach einem der Ansprüche 1 bis 4, wobei die einigen der Slaveknoten dazu ausgelegt sind, die darin unterstützten neuronalen Netzwerke ohne Durchführen eines Trainings der neuronalen Netzwerke zu betreiben.

6. System, das Folgendes umfasst:
ein Glasfasernetzwerk, das Netzwerkknoten und Glasfaserverbindungen mit Enden an den Netzwerkknoten umfasst, wobei einer der Netzwerkknoten ein Masterknoten (120) ist und andere der Netzwerkknoten Slaveknoten (130-132) des Masterknotens sind; und
wobei der Masterknoten (120) eine elektronische Verarbeitungshardware aufweist, die dazu ausgelegt ist, Parameter eines neuronalen Netzwerks zu erhalten (510), um eine optische Startleistung für eine Glasfaserverbindung zu berechnen; und
wobei der Masterknoten (120) dazu ausgelegt ist, die Parameter via das Glasfasernetzwerk an einige der Slaveknoten zu senden (520); und
wobei jeder der Slaveknoten (130-132) eine elektronische Verarbeitungshardware beinhaltet, um ein neuronales Netzwerk beim Berechnen einer optischen Startleistung von einer oder mehreren Faserverbindungen zu unterstützen, die an dem einen der Slaveknoten enden; und
wobei die einigen der Slaveknoten (130-132) dazu ausgelegt sind, das darin unterstützte neuronale Netzwerk in Reaktion auf das Empfangen der vom Masterknoten gesendeten Parameter zu aktualisieren (530),
wobei der Masterknoten dazu ausgelegt ist, die Parameter durch Trainieren eines neuronalen Netzwerks, das von der elektronischen Verarbeitungshardware davon unterstützt wird, zu erhalten, um eine optische Startleistung für eine Glasfaserverbindung zu berechnen,
wobei der Masterknoten dazu ausgelegt ist, die Parameter mindestens teilweise auf Basis von Informationen zu erhalten, die durch den Masterknoten von einem oder mehreren der Slaveknoten empfangen werden, wobei die Informationen Anpassungen der optischen Startleistung anzeigen, die von dem einen oder den mehreren der Slaveknoten auf Basis von Ausgaben des darin unterstützten neuronalen Netzwerks anzeigen.

7. System nach Anspruch 6, wobei der Masterknoten dazu ausgelegt ist, die erhaltenen Parameter über das Glasfasernetzwerk in einer Broadcastnachricht mit einem Header, der die einigen der Slaveknoten identifiziert, zu übertragen.

8. System nach einem der Ansprüche 6 bis 7, wobei der Masterknoten eine Reihenfolge, in der die entsprechenden der Parameter in den neuronalen Netzwerken, die von den einigen der Slaveknoten unterstützt werden, zu ersetzen sind, in einer Nachricht dorthin spezifiziert.

9. System nach einem der Ansprüche 6 bis 8, wobei die einigen der Slaveknoten dazu ausgelegt sind, die darin unterstützten neuronalen Netzwerke ohne Durchführen eines Trainings der neuronalen Netzwerke zu betreiben.

## Revendications

1. Procédé destiné à être utilisé dans un réseau de fibre optique comprenant un nœud instructeur et des nœuds exécutants, le procédé comprenant les étapes suivantes :
sur le nœud instructeur, obtenir (510) des paramètres d'un réseau neuronal pour calculer une puissance de lancement optique pour une liaison de fibre optique ;
depuis le nœud instructeur, envoyer (520) les paramètres via le réseau de fibre optique à certains des nœuds exécutants, chacun des nœuds exécutants prenant en charge un réseau neuronal pour calculer une puissance de lancement optique d'au moins une liaison de fibre optique dont une extrémité se trouve au niveau de l'un des nœuds exécutants ; et
sur lesdits certains des nœuds exécutants, mettre à jour (530) le réseau neuronal qu'ils prennent en charge sur la base des paramètres envoyés par le nœud instructeur ;
dans lequel le fait d'obtenir les paramètres comporte l'entraînement du réseau neuronal au niveau du nœud instructeur pour calculer une puissance de lancement optique pour une liaison de fibre optique,
dans lequel le fait d'obtenir les paramètres est basé au moins partiellement sur des informations reçues d'un ou plusieurs des nœuds exécutants, les informations indiquant les ajustements de puissance de lancement optique effectués par les un ou plusieurs des nœuds exécutants sur la base des sorties du réseau neuronal qu'ils prennent en charge.

2. Procédé selon la revendication 1, dans lequel l'envoi comporte la transmission des paramètres sur le réseau de fibre optique dans un message de diffusion ayant un en-tête identifiant lesdits certains des nœuds exécutants.

3. Procédé selon l'une des revendications 1 à 2, dans lequel l'envoi est effectué sans interrompre un trafic de plan utilisateur et de contrôle à travers le réseau de fibre optique.

4. Procédé selon l'une des revendications 1 à 3,
dans lequel l'envoi spécifie un ordre dans lequel des paramètres correspondants parmi les paramètres doivent être remplacés dans les réseaux neuronaux pris en charge par lesdits certains des nœuds exécutants.

5. Procédé selon l'une des revendications 1 à 4, dans lequel lesdits certains des nœuds exécutants sont configurés pour faire fonctionner les réseaux neuronaux qu'ils prennent en charge sans entraîner lesdits réseaux neuronaux.

6. Système, comprenant :
un réseau de fibre optique comprenant des nœuds de réseau et des liaisons de fibre optique dont les extrémités se trouvent au niveau des nœuds de réseau, l'un des nœuds de réseau étant un nœud instructeur (120) et les autres nœuds de réseau étant des nœuds exécutants (130-132) du nœud instructeur ; et
dans lequel le nœud instructeur (120) a un matériel de traitement électronique configuré pour obtenir (510) des paramètres d'un réseau neuronal pour calculer une puissance de lancement optique pour une liaison de fibre optique ; et
dans lequel le nœud instructeur (120) est configuré pour envoyer (520) les paramètres via le réseau de fibre optique à certains des nœuds exécutants ; et
dans lequel chacun des nœuds exécutants (130-132) comporte un matériel de traitement électronique pour prendre en charge un réseau neuronal pour calculer une puissance de lancement optique d'une ou plusieurs liaisons de fibre se terminant au niveau dudit un des nœuds exécutants ; et
dans lequel lesdits certains des nœuds exécutants (130-132) sont configurés pour mettre à jour (530) le réseau neuronal qu'ils prennent en charge en réponse à la réception des paramètres envoyés par le nœud instructeur,
dans lequel le nœud instructeur est configuré pour obtenir les paramètres en entraînant un réseau neuronal pris en charge par son matériel de traitement électronique pour calculer une puissance de lancement optique pour une liaison de fibre optique,
dans lequel le nœud instructeur est configuré pour obtenir les paramètres en se basant au moins en partie sur des informations reçues d'un ou plusieurs des nœuds exécutants par le nœud instructeur, les informations indiquant des ajustements de puissance de lancement optique effectués par les un ou plusieurs des nœuds exécutants sur la base des sorties du réseau neuronal qu'ils prennent en charge.

7. Système selon la revendication 6, dans lequel le nœud instructeur est configuré pour transmettre les paramètres obtenus sur le réseau de fibre optique dans un message de diffusion ayant un en-tête identifiant lesdits certains des nœuds exécutants.

8. Système selon l'une des revendications 6 à 7, dans lequel le nœud instructeur spécifie un ordre dans lequel des paramètres correspondants parmi les paramètres doivent être remplacés dans les réseaux neuronaux pris en charge par lesdits certains des nœuds exécutants dans un message qui leur est destiné.

9. Système selon l'une des revendications 6 à 8, dans lequel lesdits certains des nœuds exécutants sont configurés pour faire fonctionner les réseaux neuronaux qu'ils prennent en charge sans entraîner lesdits réseaux neuronaux.
